# FASCICULE DE BREVET EUROPEEN

(11) **EP 0 677 483 B1**
(45) Date de publication et mention de la délivrance du brevet: **02.09.1998**
(21) Numéro de dépôt: 95400753.0
(22) Date de dépôt: 04.04.1995
(51) Int. Cl.: C01B 3/50, F25J 3/02, C01B 31/18

(54) **Procédé et installation de séparation d'un mélange gazeux**
Verfahren und Vorrichtung für die Trennung einer Gasmischung
Process and apparatus for the separation of a gaseous mixture

(30) Priorité: 13.04.1994 FR 9404392
(43) Date de publication de la demande: 18.10.1995
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Billy, Jean, F-94420 Le Plessis Trevise (FR); Granier, François, F-94130 Nogent Sur Marne (FR); Victor, Pascal, F-95140 Garges les Gonesse (FR)
(74) Mandataire: Mercey, Fiona Susan

(56) Documents cités:
- DE-A- 4 210 638
- US-A- 4 805 414
- LINDE BERICHTE AUS TECHNIK UND WISSENSCHAFT, no. 62, 1988 WIESBADEN DE, pages 18-23, DR. R. BERNINGER 'Fortschritte bei der H2/CO-Tieftemperaturzerlegung'
- DON W. GREEN (ED.) 'Perry's chemical engineers' handbook, sixth edition' 1984 , MCGRAW-HILL , NEW YORK, USA * page 12-48 Properties of cryogenic fluids *

## Description

La présente invention concerne un procédé et une installation de séparation d'un mélange gazeux contenant de l'hydrogène, du monoxyde de carbone et du méthane pour produire l'hydrogène et le monoxyde de carbone comme produits purs.

Dans le procédé classique, dit 〈〈 condensation partielle 〉〉, l'hydrogène, séparé du mélange gazeux, après refroidissement à basse température, est détendu à une pression de l'ordre de 5 à 10 bars afin de fournir des frigories pour maintenir l'installation en froid, et refroidir le mélange gazeux au dessous de -200°C. Une installation de ce type est décrite en US-A-4 217 759 et utilise au moins quatre colonnes pour produire du monoxyde de carbone avec un rendement de 95 % et une pureté d'environ 99 %. Le rendement d'hydrogène est de l'ordre de 99,9 % avec une pureté d'environ 95 %.

DE-A-4210638 décrit un procédé de production de monoxyde de carbone et d'hydrogène dans lequel les frigories sont fournies par détente d'hydrogène. La même technique de production de froid est connue également de US-A-4 805 414 qui préconise également un cycle de monoxyde de carbone provenant d'une des colonnes de distillation du procédé.

L'invention a pour but, tout en conservant ces puretés et ces rendements élevés, de simplifier le procédé et l'installation, en réduisant le nombre de colonnes utilisées pour les étapes de séparation. Elle a également pour but d'assurer que la température la plus froide de l'installation soit au dessus de celle du procédé classique et de présenter une installation avec un coût d'investissement réduit par rapport à l'art antérieur.

A cet effet, l'invention a pour objet un procédé de production de monoxyde de carbone et d'hydrogène à partir d'un mélange gazeux comprenant essentiellement ces deux corps et du méthane caractérisé en ce qu'il comprend les étapes suivantes :
i) refroidir le mélange gazeux de départ afin de le condenser partiellement;
ii) séparer une partie condensée du mélange d'une partie non-condensée contenant principalement l'hydrogène;
iii) envoyer ladite partie condensée dans une colonne de stripping pour produire une fraction gazeuse en tête de colonne comportant l'hydrogène et une fraction liquide en cuve de colonne contenant du monoxyde de carbone et du méthane;
iv) distiller la fraction liquide dans une colonne d'épuration pour produire du monoxyde de carbone substantiellement pur en tête de colonne et du méthane en cuve de colonne; et
v) apporter une partie de l'énergie de séparation au moyen d'un cycle frigorifique utilisant un fluide frigorifique autonome.

De préférence, le fluide frigorifique sert à refroidir un condenseur de tête de la colonne d'épuration.

Le fluide frigorifique peut également chauffer la cuve de la colonne de stripping, la cuve de la colonne d'épuration ou les deux.

Bien que le fluide frigorifique soit préférablement l'azote, il peut être choisi dans le groupe qui comprend l'air, I'oxygène, l'argon et l'oxyde de carbone.

L'invention a également pour objet une installation de production de monoxyde de carbone et d'hydrogène à partir d'un mélange gazeux comprenant essentiellement ces deux corps et du méthane caractérisé en ce qu'elle comprend :
un séparateur de phases, une colonne de stripping, une colonne d'épuration, des moyens pour introduire le mélange gazeux dans le séparateur de phases et pour en soutirer une partie gazeuse, comprenant essentiellement de l'hydrogène, et une partie liquide, des moyens pour envoyer la partie liquide à la colonne de stripping, pour en soutirer un liquide contenant principalement du méthane et du monoxyde de carbone et pour envoyer ce liquide à la colonne d'épuration, des moyens pour soutirer de la colonne d'épuration du monoxyde de carbone gazeux et des moyens pour apporter une partie de l'énergie de séparation au moyen d'un cycle frigorifique utilisant un fluide frigorifique autonome.

Le cycle frigorifique peut assurer le reflux en tête de la colonne d'épuration constitués par un cycle de fluide frigorifique.

Le cycle de fluide frigorifique comprend un compresseur pour comprimer le fluide frigorifique à une pression entre 10 et 34 bars, selon le système de rebouillage utilisé pour la cuve de la colonne d'épuration.

Quand ladite cuve est chauffée par un rebouilleur classique, la pression du fluide frigorifique doit monter au-delà de 25 bars.

Le cycle est particulièrement simple et peut utiliser un compresseur de type standard qui est peu coûteux avec éventuellement une turbine pour fournir du froid au système.

Avec ce procédé tel que revendiqué, on n'a plus besoin de refroidir le gaz à traiter jusqu'à -200°C comme précédemment, une température de -194°C est suffisante pour le procédé de séparation.

En tout, l'investissement correspondant à l'installation selon l'invention est d'environ 20 % inférieur à celui des procédés connus pour cette séparation.

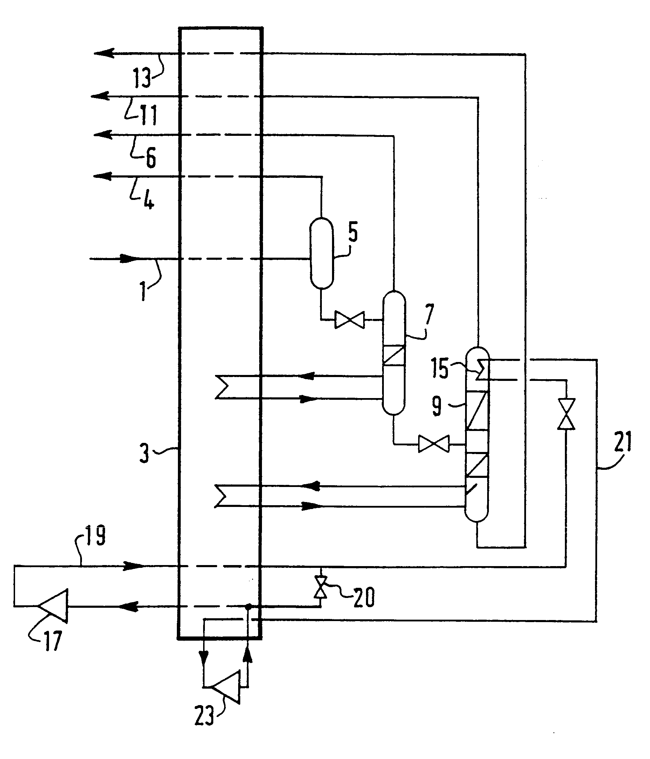

D'autres caractéristiques et avantages de l'invention ressortiront mieux de la description qui va suivre, faite en référence au dessin annexé, qui est un schéma de principe d'une opération de séparation selon le mode de réalisation de l'invention.

Dans le système illustré par la figure, un mélange de gaz de synthèse contient du méthane résiduel ainsi que de l'hydrogène et du monoxyde de carbone. Ce mélange contient de façon caractéristique 50 à 70 moles % d'hydrogène, 15 à 45 moles % de monoxyde de carbone et 2 à 6 moles % de méthane, avec de faibles quantités d'impuretés.

Le mélange gazeux à traiter est comprimé à 45 bars, traverse la conduite 1 et subit un refroidissement à une température d'environ -194°C dans l'échangeur 3, d'où il sort partiellement condensé. Une fraction liquide et une fraction gazeuse sont soutirées du séparateur de phases 5. La fraction gazeuse contient essentiellement de l'hydrogène et est ensuite réchauffée dans l'échangeur 3 pour constituer la majeure partie de l'hydrogène produit 4 à pression élevée.

La fraction liquide, contenant principalement de l'hydrogène et du monoxyde de carbone, est détendue dans une vanne pour réduire sa pression dans la colonne de "stripping" 7 à 12,5 bars.

Le gaz de flash contenant de l'hydrogène issu de cette colonne 7 peut être mélangé avec le flux principal d'hydrogène 4, afin de maximiser la quantité d'hydrogène récupéré. Sinon il peut constituer une production d'hydrogène à moyenne pression. Le liquide issu de cette colonne 7 à -160,3°C est composé principalement de monoxyde de carbone qui est ensuite détendu à -177,5°C et purifié par distillation dans une colonne d'épuration 9 à 4 bars pour produire comme gaz de tête du monoxyde de carbone pur et comme liquide de cuve du méthane. Le monoxyde de carbone et le méthane contenant les impuretés lourdes sont soutirés respectivement par les conduites 11, 13 et réchauffés dans l'échangeur 3.

Le condenseur de tête 15 de la colonne d'épuration 9 est refroidi par un cycle de fluide frigorifique autonome dont le fluide de cycle est de l'azote, cycle qui est entièrement séparé des circuits des autres fluides précités.

L'azote de cycle, provenant d'une source extérieure, subit une compression dans un compresseur 17 à 10 bars, passe dans une conduite haute pression 19, est refroidi et liquéfié dans l'échangeur 3, avant d'être détendu et séparé en deux courants. Un premier courant est introduit dans le condenseur de tête 15 où il se vaporise à 4,5 bars. Un second courant de l'azote à 10 bars est détendu par effet Joule-Thomson dans une vanne 20 à 1,2 bar puis envoyé à l'échangeur 3 où il se réchauffe avant d'être recomprimé par le compresseur 17.

L'azote vaporisé dans le condenseur est seulement partiellement réchauffé dans l'échangeur 3 avant d'être détendu par la turbine 23 de 4,5 à 1,2 bar, remélangé avec l'azote détendu par la vanne 20, avant de poursuivre son réchauffement et d'être envoyé au compresseur 17.

La turbine 23 peut être remplacée par un autre moyen de production de froid tel que l'injection d'azote liquide dans la conduite 21 en amont de l'échangeur 3. Après être vaporisé dans l'échangeur, l'azote gazeux en excès est purgé en amont ou en aval du compresseur 17.

Dans le cas où la partie froide de l'installation est suffisamment bien isolée, on peut supprimer tout moyen de production de froid car les pertes thermiques sont compensées par l'effet Joule-Thomson sur le gaz à traiter et sur le fluide de cycle.

La cuve de la colonne d'épuration 9 est chauffée en soutirant du monoxyde de carbone liquide presque pur du premier plateau de la cuve de la colonne, ce liquide étant partiellement vaporisé dans l'échangeur 3, avant d'être renvoyé en cuve de colonne au dessous de son point de soutirage, le gradient de température entre le premier plateau et la cuve de la colonne d'épuration 9 étant particulièrement important.

La cuve de la colonne de stripping 7 est chauffée de la même façon en vaporisant partiellement dans l'échangeur 3 le liquide du premier plateau.

## Revendications

1. Procédé de production de monoxyde de carbone et d'hydrogène à partir d'un mélange gazeux comprenant essentiellement ces deux corps et du méthane comprenant les étapes suivantes :
i) refroidir le mélange gazeux de départ afin de le condenser partiellement ;
ii) séparer une partie condensée du mélange d'une partie non-condensée contenant principalement l'hydrogène ;
iii) envoyer ladite partie condensée dans une colonne de stripping (7) pour produire une fraction gazeuse en tête de colonne comportant l'hydrogène et une fraction liquide en cuve de colonne contenant du monoxyde de carbone et du méthane ;
iv) distiller la fraction liquide dans une colonne d'épuration (9) pour produire du monoxyde de carbone substantiellement pur en tête de colonne et du méthane en cuve de colonne ; et
v) caractérisé en ce qu'une partie de l'énergie de séparation est apportée au moyen d'un cycle frigorifique utilisant un fluide frigorifique autonome.

2. Procédé selon la revendication 1 dans lequel on refroidit la tête de la colonne d'épuration (9) en y vaporisant le fluide frigorifique.

3. Procédé selon la revendication 1 ou 2 dans lequel on chauffe la cuve de la colonne d'épuration (9) et/ou la cuve de la colonne de stripping (7) au moyen du fluide frigorifique.

4. Procédé selon la revendication 1, 2 ou 3 dans lequel le fluide frigorifique est choisi dans le groupe qui comprend l'azote, l'air, I'oxygène, l'argon et l'oxyde de carbone.

5. Procédé selon l'une des revendications précédentes dans lequel on comprime et liquéfie le fluide frigorifique à une pression de 10 à 34 bars avant de le vaporiser dans le condenseur de tête de la colonne d'épuration (9).

6. Procédé selon la revendication 5, dans lequel on détend dans une turbine (23) le fluide frigorifique utilisé pour refroidir le condenseur (15) afin de fournir les frigories nécessaires à la tenue en froid de l'appareil et on le réchauffe et le renvoie à l'aspiration du compresseur (17).

7. Procédé selon l'une des revendications 5 et 6, dans lequel une partie du fluide frigorifique sous forme liquide est détendue par effet Joule-Thomson (20) et renvoyée à l'aspiration du compresseur (17) après être réchauffée.

8. Procédé selon l'une des revendications précédentes, dans lequel on produit des frigories en rajoutant un débit de fluide frigorifique sous forme liquide au cycle que l'on vaporise ensuite dans un échangeur (3).

9. Procédé selon l'une des revendications précédentes dans lequel on chauffe la cuve de la colonne d'épuration (9) avec un liquide soutiré au dessous d'un premier plateau de la colonne d'épuration, vaporisé au moins partiellement dans l'échangeur (3) et réintroduit dans la colonne d'épuration (9) à un point au dessous du point de soutirage.

10. Procédé selon l'une des revendications précédentes dans lequel on chauffe la cuve de la colonne de stripping (7) avec un liquide soutiré au-dessous d'un premier plateau de la colonne de stripping (7), vaporisé au moins partiellement dans l'échangeur (3) et réintroduit dans la colonne de stripping (7) à un point au-dessous du point de soutirage.

11. Installation de production de monoxyde de carbone et d'hydrogène à partir d'un mélange gazeux comprenant essentiellement ces deux corps et du méthane comprendant :
un séparateur de phases, une colonne de stripping (7), une colonne d'épuration (9), des moyens (1), pour introduire le mélange gazeux dans le séparateur de phases (5) et pour en soutirer une partie gazeuse comprenant essentiellement de l'hydrogène et une partie liquide, des moyens pour envoyer la partie liquide à la colonne de stripping (7), pour en soutirer un liquide contenant principalement du méthane et du monoxyde de carbone et pour envoyer ce liquide à la colonne d'épuration (9), des moyens (11, 13) pour soutirer de la colonne d'épuration (9) du monoxyde de carbone gazeux
caractérisée en ce qu'elle comprend des moyens pour apporter une partie de l'énergie de séparation au moyen d'un cycle frigorifique utilisant un fluide frigorifique autonome.

12. Installation selon la revendication 11 dans laquelle le cycle de fluide frigorifique refroidit la tête de la colonne d'épuration (9).

13. Installation selon l'une des revendications 11 ou 12 comprenant des moyens pour chauffer la cuve de la colonne d'épuration (9) et la cuve de la colonne de stripping (7) constitués par le cycle de fluide frigorifique.

14. Installation selon la revendication 11, 12 ou 13 dans laquelle le fluide frigorifique est choisi dans le groupe qui comprend l'azote, l'air, l'oxygène, l'argon et l'oxyde de carbone.

15. Installation selon l'une des revendications 12, 13 ou 14 dans laquelle le cycle de fluide frigorifique comprend un compresseur (17) capable de comprimer le fluide frigorifique à une pression de 10 à 34 bars.

16. Installation selon la revendication 15 dans laquelle, pour maintenir le système en froid, le fluide frigorifique utilisé pour refroidir la tête de la colonne d'épuration (9) est détendu dans une turbine (23), réchauffé et renvoyé au compresseur (17).

17. Installation selon l'une des revendications 15 et 16 comprenant des moyens (20) pour détendre par effet Joule-Thomson une partie du fluide comprimé avant de la renvoyer au compresseur (17).

## Claims

1. Process for producing carbon monoxide and hydrogen, from a gas mixture essentially comprising these two substances and methane, which comprises the following steps:
i) cooling the initial gas mixture so as to condense it partially;
ii) separating a condensed part of the mixture from an uncondensed part containing mainly hydrogen;
iii) sending the said condensed part into a stripping column (7) in order to produce, at the head of the column, a gas fraction containing hydrogen and, in the collector of the column, a liquid fraction containing carbon monoxide and methane;
iv) distilling the liquid fraction in a purification column (9) in order to produce substantially pure carbon monoxide at the top of the column and methane in the collector of the column; and
v) characterized in that part of the separation energy is provided by means of a refrigerating cycle using a self-contained refrigerant.

2. Process according to Claim 1, in which the head of the purification column (9) is cooled by boiling off the refrigerant thereat.

3. Process according to Claim 1 or 2, in which the collector of the purification column (9) and/or the collector of the stripping column (7) is heated by means of the refrigerant.

4. Process according to Claim 1, 2 or 3, in which the refrigerant is chosen from the group comprising nitrogen, air, oxygen, argon and carbon monoxide.

5. Process according to one of the preceding claims, in which the refrigerant is compressed and liquefied at a pressure of 10 to 34 bar before it is boiled off in the condenser at the top of the purification column (9).

6. Process according to Claim 5, in which the refrigerant used for cooling the condenser (15) is expanded in a turbine (23), so as to provide the refrigeration necessary for keeping the apparatus cold, and the refrigerant is warmed and sent to the inlet of the compressor (17).

7. Process according to either of Claims 5 and 6, in which part of the refrigerant in liquid form is expanded by the Joule-Thomson effect (20) and sent to the inlet of the compressor (17) after having been warmed.

8. Process according to one of the preceding claims, in which the refrigeration is obtained by adding a stream of refrigerant in liquid form to the cycle which is then boiled off in an exchanger (3).

9. Process according to one of the preceding claims, in which the collector of the purification column (9) is warmed by a liquid drawn off from beneath a first tray of the purification column, at least partially boiled off in the exchanger (3) and reintroduced into the purification column (9) at a point below the draw-off point.

10. Process according to one of the preceding claims, in which the collector of the stripping column (7) is warmed by a liquid drawn off from below a first tray of the stripping column (7), at least partially boiled off in the exchanger (3) and reintroduced into the stripping column (7) at a point below the draw-off point.

11. Plant for producing carbon monoxide and hydrogen from a gas mixture essentially comprising these two substances and methane, which comprises:
a phase separator, a stripping column (7), a purification column (9), means (1) for introducing the gas mixture into the phase separator (5) and for drawing off therefrom a gaseous part essentially comprising hydrogen and a liquid part, means for sending the liquid part to the stripping column (7), in order to draw off therefrom a liquid mainly containing methane and carbon monoxide and to send this liquid to the purification column (9), means (11, 13) for drawing off gaseous carbon monoxide from the purification column (9), characterized in that it comprises means for providing part of the separation energy by means of a refrigeration cycle using a self-contained refrigerant.

12. Plant according to Claim 11, in which the cycle of refrigerant cools the top of the purification column (9).

13. Plant according to either of Claims 11 or 12, which comprises means for warming the collector of the purification column (9) and the collector of the stripping column (7), these means consisting of the cycle of refrigerant.

14. Plant according to Claim 11, 12 or 13, in which the refrigerant is chosen from the group comprising nitrogen, air, oxygen, argon and carbon monoxide.

15. Plant according to one of Claims 12, 13 or 14, in which the cycle of refrigerant comprises a compressor (17) capable of compressing the refrigerant at a pressure of 10 to 34 bar.

16. Plant according to Claim 15, in which, in order to keep the system cold, the refrigerant used for cooling the head of the purification column (9) is expanded in a turbine (23), warmed and sent to the compressor (17).

17. Plant according to either of Claims 15 and 16, which comprises means (20) for expanding part of the compressed fluid by the Joule-Thomson effect before sending it to the compressor (17).

## Patentansprüche

1. Verfahren zur Herstellung von Kohlenmonoxid und Wasserstoff aus einem im wesentlichen diese beiden Körper und Methan enthaltenden Gasgemisch, umfassend die folgenden Stufen:
i) Abkühlung des Ausgangsgasgemischs zur partiellen Kondensation,
ii) Abtrennung eines kondensierten Teils des Gemischs von einem unkondensierten, vorwiegend Wasserstoff enthaltenden Teil,
iii) Überführung des besagten kondensierten Teils in eine Abstreifkolonne (7) zur Erzeugung einer Wasserstoff enthaltenden, gasförmigen Fraktion am Kolonnenkopf und einer Kohlenmonoxid und Methan enthaltenden flüssigen Fraktion im Kolonnensumpf und
iv) Destillation der flüssigen Fraktion in einer Reinigungskolonne (9) zur Erzeugung weitgehend reinen Kohlenmonoxids am Kolonnenkopf und Methans im Kolonnensumpf,
dadurch gekennzeichnet, daß
v) man einen Teil der Trennenergie mittels eines ein unabhängiges Tiefkühlfluid verwendenden Tiefkühlkreislaufs einbringt.

2. Verfahren nach Anspruch 1, wobei man den Kopf der Reinigungskolonne (9) durch Verdampfung des Tiefkühlfluids darin kühlt.

3. Verfahren nach Anspruch 1 oder 2, wobei man den Sumpf der Reinigungskolonne (9) und/oder den Sumpf der Abstreifkolonne (7) mittels des Tiefkühlfluids heizt.

4. Verfahren nach Anspruch 1, 2 oder 3, wobei man das Tiefkühlfluid aus der Stickstoff, Luft, Sauerstoff, Argon und Kohlenoxid umfassenden Gruppe auswählt.

5. Verfahren nach einem der vorhergehenden Ansprüche, wobei man das Tiefkühlfluid vor dessen Verdampfung im Kondensator am Kopf der Reinigungskolonne (9) auf einen Druck von 10 bis 34 bar komprimiert und verflüssigt.

6. Verfahren nach Anspruch 5, wobei man das zur Kühlung des Kondensators (15) verwendete Tiefkühlfluid in einer Turbine (23) entspannt, um die zur Kalthaltung der Apparatur erforderlichen Kältekalorien zu liefern, und es wiedererwärmt und auf die Saugseite des Kompressors (17) zurückführt.

7. Verfahren nach einem der Ansprüche 5 und 6, wobei man einen Teil des Tiefkühlfluids in flüssiger Form durch den Joule-Thomson-Effekt (20) entspannt und nach Wiedererwärmung auf die Saugseite des Kompressors (17) zurückführt.

8. Verfahren nach einem der vorhergehenden Ansprüche, wobei man Kaltekalorien dadurch erzeugt, daß man einen Anteil des Tiefkühlfluids in flüssiger Form dem Kreislauf wieder zusetzt und dann in einem Austauscher (3) verdampft.

9. Verfahren nach einem der vorhergehenden Ansprüche, wobei man den Sumpf der Reinigungskolonne (9) mit einer Flüssigkeit heizt, die man unter dem ersten Boden der Reinigungskolonne abzieht, im Austauscher (3) mindestens teilweise verdampft und an einer Stelle unter der Abzugsstelle wieder in die Reinigungskolonne (9) einführt.

10. Verfahren nach einem der vorhergehenden Ansprüche, wobei man den Sumpf der Abstreifkolonne (7) mit einer Flüssigkeit heizt, die man unter dem ersten Boden der Abstreifkolonne (7) abzieht, mindestens teilweise im Austauscher (3) verdampft und an einer Stelle unter der Abzugsstelle wieder in die Abstreifkolonne (7) einführt.

11. Vorrichtung zur Herstellung von Kohlenmonoxid und Wasserstoff aus einem im wesentlichen diese beiden Körper und Methan enthaltenden Gasgemisch, umfassend:
einen Phasentrenner, eine Abstreifkolonne (7), eine Reinigungskolonne (9), Mittel (1) zur Einführung des Gasgemischs in den Phasentrenner (5) und zum Abziehen eines im wesentlichen Wasserstoff enthaltenden, gasförmigen Anteils und eines flüssigen Anteils, Mittel zur Überführung des flüssigen Anteils in die Abstreifkolonne (7), um daraus eine vorwiegend Methan und Kohlenmonoxid enthaltende Flüssigkeit abzuziehen und diese in die Reinigungskolonne (9) zu überführen, und Mittel (11, 13) zum Abziehen gasförmigen Kohlenmonoxids aus der Reinigungskolonne (9),
dadurch gekennzeichnet, daß
sie Mittel zum Einbringen eines Teils der Trennenergie mittels eines ein unabhängiges Tiefkühlfluid verwendenden Tiefkühlkreislaufs enthält.

12. Vorrichtung nach Anspruch 11, wobei der Tiefkühlfluidkreislauf den Kopf der Reinigungskolonne (9) kühlt.

13. Vorrichtung nach einem der Ansprüche 11 oder 12, umfassend Mittel zum Heizen des Sumpfes der Reinigungskolonne (9) und des Sumpfes der Abstreifkolonne (7), bestehend aus dem Tiefkühlfluidkreislauf.

14. Vorrichtung nach Anspruch 11, 12 oder 13, wobei man das Tiefkühlfluid aus der Stickstoff, Luft, Sauerstoff, Argon und Kohlenoxid umfassenden Gruppe auswählt.

15. Vorrichtung nach einem der Ansprüche 12, 13 oder 14, wobei der Tiefkühlfluidkreislauf einen Kompressor (17) aufweist, der zur Kompression des Tiefkühlfluids auf einen Druck von 10 bis 34 bar fähig ist.

16. Vorrichtung nach Anspruch 15, wobei zur Kalthaltung des Systems das zur Kühlung des Kopfes der Reinigungskolonne (9) verwendete Tiefkühlfluid in einer Turbine (23) entspannt, wieder erwärmt und wieder dem Kompressor (17) zugeführt wird.

17. Vorrichtung nach einem der Ansprüche 15 und 16, enthaltend Mittel (20) zur Entspannung eines Anteils des komprimierten Fluids durch den Joule-Thomson-Effekt vor der Rückführung zum Kompressor (17).
